Europäisches Patentamt

European Patent Office

Office européen des brevets

(11) Veröffentlichungsnummer: **0 400 366**
**A1**

## EUROPÄISCHE PATENTANMELDUNG

(21) Anmeldenummer: **90108773.4**

(22) Anmeldetag: **10.05.90**

(51) Int. Cl.⁵: **A01B 35/12**

(30) Priorität: **30.05.89 DE 3917450**

(43) Veröffentlichungstag der Anmeldung:
**05.12.90 Patentblatt 90/49**

(84) Benannte Vertragsstaaten:
**BE DE FR IT NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Kemper, Martin**
**Fontanestrasse 15**
**D-4506 Hagen am T.W.(DE)**

(54) **Von einem Schlepper ziehbare Anordnung von Hacken.**

(57) Von einem Schlepper ziehbare Anordnung von Hacken, die Hackwerkzeuge aufweisen und in Fahrtrichtung versetzt an Halterungsträgern angebracht sind, die über in vertikaler Richtung nachgiebige Parallelogrammgestänge an einen am Schlepper anzukuppelnden Querträger angebracht sind, wobei die Winkellage der Hackwerkzeuge zum Erdboden durch entsprechende Verstellung veränderbar ist (Schnittwinkelverstellung). Um unter Beibehaltung der Vorteile der Schnittwinkelverstellung und mit der gleichen Eingriffstiefe der einzelnen hintereinander angeordneten Hackwerkzeuge bei Schnittwinkelverstellung, die gattungsgemäße Vorrichtung wesentlich hinsichtlich ihrer Einstellung zu vereinfachen, ist vorgesehen, daß die Hackwerkzeuge (21) jeweils um eine quer zur Fahrtrichtung (14) verlaufende Achse (15) gegenüber den an Parallelogrammgestängen (9) angeordneten Halterungsträgern (6) verschwenkbar angeordnet sind.

FIG. 1

EP 0 400 366 A1

## Von eimem Schlepper ziehbare Anordnung von Hacken

Die Erfindung betrifft eine von einem Schlepper ziehbare Anordnung von Hacken gemäß des Oberbegriffes des Patentanspruches 1.

Eine derartige Anordnung von Hacken ist beispielsweise durch die europäische Patentschrift 00 98 393 bekannt. Bei diesem Hackgerät müssen die einzelnen Werkzeuge, wenn der Halterungsträger um eine quer zur Fahrtrichtung verlaufende Achse zum Zwecke der Schnittwinkelverstellung verstellt wird, gegenüber dem federnden Teil bzw. der Halterung in der Höhe nachgestellt werden, damit alle Hackwerkzeuge gleich tief in den Boden eingreifen. Diese bekannte Hackanordnung und das damit verbundene Verstellen jedes einzelnen Hackwerkzeuges in der Höhe gegenüber dem Halterungsträger bzw. der Halterung ist für den Landwirt sehr zeitaufwendig. Außerdem ist es bei der Anordnung von federnden Hacken erforderlich, die Hackwerkzeuge aus zwei Teilen, nämlich als einen starren Hackwerkzeugteil und einen federndem Zwischenteil auszubilden.

Der Erfindung liegt die Aufgabe zugrunde, unter Beibehaltung der Vorteile der Schnittwinkelverstellung und mit der gleichen Eingriffstiefe der einzelnen, der hintereinander angeordneten Hackwerkzeuge bei Schnittwinkelverstellung, die gattungsgemäße Vorrichtung wesentlich hinsichtlich ihrer Einstellung zu vereinfachen.

Diese Aufgabe wird erfindungsgemäß dadurch gelöst, daß die Werkzeuge jeweils um eine quer zur Fahrtrichtung verlaufende Achse schwenkbar gegenüber dem Parallelogrammgestänge an den Halterungsträgern angeordnet sind. Infolge dieser Maßnahme ist es möglich, in einfachster Weise lediglich die Werkzeuge um eine quer zur Fahrtrichtung verlaufende Achse zu verschwenken, um so den Schnittwinkel zu verändern. Die Eingriffstiefe der in Fahrtrichtung hintereinander angeordneten Hackwerkzeuge in den Boden bleibt beim Verschwenken in erfindungsgemäßer Weise unverändert beibehalten. Im bevorzugter Weise sind die Halterungen für die einzelnen Werkzeuge mit den Werkzeugen gegenüber dem Halterungsträger um eine quer zur Fahrtrichtung verlaufende Achse verschwenkbar.

Hierbei ist vorgesehen, daß die an ein Parallelogrammgestänge angeordneten Hackwerkzeuge einzeln gegenüber dem Halterungsträger verschwenkbar und in verschiedenen Winkellagen fixierbar sind. Hierdurch können unterschiedliche Schnittwinkel eingestellt werden, wobei jedoch immer durch die erfindungsgemäße Anordnung sichergestellt bleibt, daß die gleiche Eingriffstiefe für alle in Fahrtrichtung hintereinander angeordneten Hackwerkzeuge erhalten bleibt.

Wenn die jeweils an einem Parallelogrammgestänge angeordneten Hackwerkzeuge über eine gemeinsame Einstellvorrichtung zumindest an einem Halterungsträger verschwenkbar und in ihrer Winkellage fixierbar sind, ergibt sich eine sehr komfortable Einstellung des Schnittwinkels für sämtliche Hackwerkzeuge an einem Halterungsträger. Hierbei kann die Verstelleinrichtung beispielsweise als Spindel ausgebildet sein, auch ist es möglich, die Winkellage in Stufen veränderbar zu gestalten, wobei die Arretierung vorzugsweise in einem in Löchern einrastbaren Fixierbolzen besteht.

Die Hackwerkzeuge können aus einem an der Halterung angeodneten Federteil bestehen oder selbst als federnde Werkzeuge ausgebildet sein. Durch die erfindungsgemäße Anordnung der Hackwerkzeuge an den Halterungsträgern, ist es erstmalig möglich geworden, als federnde Werkzeuge ausgebildete Hackwerkzeuge einzusetzen, und eine Schnittwinkelverstellung zu verwirklichen, bei der sich die Eingriffstiefe der Hackwerkzeuge, welche in Abstand in Fahrtrichtung gesehen hintereinander angeordnet sind, nicht verändert.

Weitere Einzelheiten der Erfindung sind der Beispielsbeschreibung und den Zeichnungen zu entnehmen. Hierbei zeigt

Fig. 1 die von einem Schlepper ziehbare Anordnung von Hacken mit Spindelverstellung der Hackwerkzeuge in Seitenansicht und

Fig. 2 die gleiche Anordnung von Hacken jedoch mit dem Unterschied, daß die Schnittwinkelverstellung der Hackwerkzeuge über einen Rastbolzen erfolgt, in Seitenansicht.

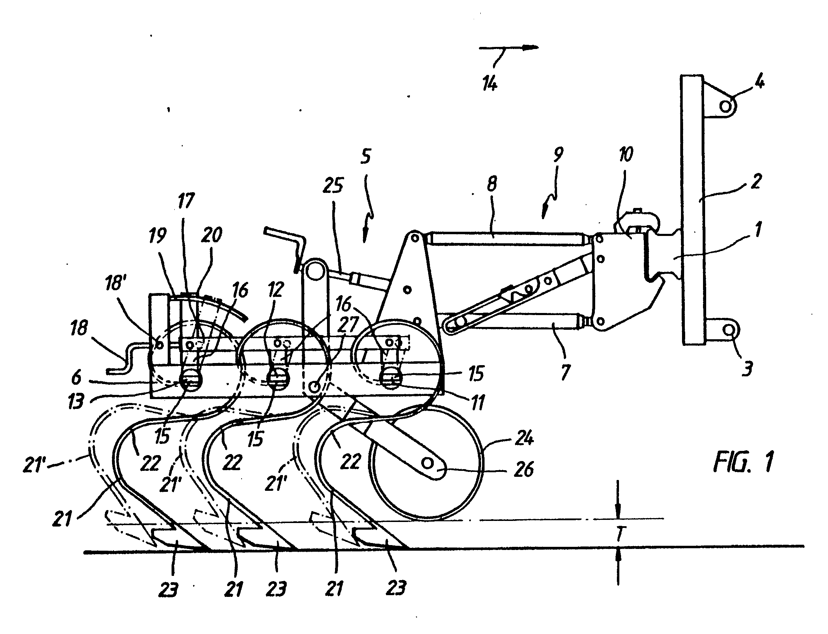

Die von einem Schlepper ziehbare Anordnung von Hacken gemäß Fig. 1 weist den sich quer zur Fahrtrichtung erstreckenden Querträger 1 auf. An diesem Querträger 1 ist auf der Vorderseite der Dreipunktkupplungsrahmen 2 mit den beiden unteren, im Abstand zueinander angeordneten Dreipunktkupplungselementen 3 und dem oberen Kupplungselement 4 angeordnet. Über die unteren Dreikupplungselemente 3 und dem oberen Dreipunktkupplungselement 4 ist der Tragrahmen 2 und somit die gesamte Anordnung der Hacken an einen nicht dargestellten Dreipunktkraftheber eines Ackerschleppers in bekannter Weise anzuordnen.

An dem Querträger 1 sind im Abstand zueinander mehrere Hackvorrichtungen 5 angeordnet. Im folgenden wird eine dieser Hackvorrichtungen 5 beschrieben.

Jede Hackvorrichtung 5 weist den Halterungsträger 6 auf, der auf seiner Vorderseite mit den beiden Lenkern 7 und 8 eines Parallelogrammgestänges 9 über die Klemmhalterung 10 an den Querträger 1 angeordnet ist. Das Parallelogrammgestänge 9 ist in vertikaler Richtung nachgiebig ausgebildet. Der Halterungsträger 6 weist die Halterungen 11, 12 und 13 auf, die in Fahrtrichtung 14 gesehen im Abstand hintereinander an dem Halterungsträger 6 angeordnet sind. Des weiteren sind die Halterungen 11,12 und 13 quer zur Fahrtrichtung 14 gesehen versetzt im Abstand zueinander angeordnet. Die Halterungen 11, 12 und 13 sind um ihre quer zur Fahrtrichtung 14 verlaufenden Längsachsen 15 verschwenkbar. Hierzu sind die Halterungen 11, 12 und 13 mit radial abstehenden Armen 16 versehen, welche gelenkig mit der Verstellstange 17 verbunden sind. An dem einen Ende der Verstellstangen 17 ist die Spindel 18 angeordnet, welche an der an dem Halterungsträger 6 angeordneten Verstellhalterung 18′ gelagert ist. Des weiteren ist an der Verstellhalterung 18′ eine Skala 19 angeordnet, an welcher in Verbindung mit dem Zeiger 20, welcher eine Verlängerung des hinteren Armes 16 ist, die Winkeleinstellung abgelesen werden kann.

An den Halterungen 11, 12 und 13 sind die Hackwerkzeuge 21 angeordnet. Die Hackwerkzeuge 21 bestehen aus dem an der Halterung 11, 12 und 13 angeordneten Federteil 22 sowie dem Hackelement 23.

Durch Drehen an der Spindel 18 wird der Verstellarm 17 parallel zur Fahrtrichtung 14 verschoben. Hierdurch werden die Hackwerkzeuge 21 jeweils um die quer zur Fahrtrichtung 14 verlaufende Schwenkachse 15 gegenüber den am Parallelogrammgestänge 9 angeordneten Halterungsträger 6 verschwenkt und in der gewünschten Winkellage zum Erdboden eingestellt. Die Hackwerkzeuge 21 sind somit beispielsweise aus der mit durchzogenen Linien dargestellten Position in die mit strichpunktierten Linien dargestellte Position 21′ verschwenkbar. Durch diese erfindungsgemäße Anordnung bleibt die Eingriffstiefe T der Hackwerkzeuge 21, genauer gesagt die Eingriffstiefe T der Hackelemente 23 in den Boden für jedes Element gleich. Vor den Hackwerkzeugen 21 ist noch an dem Halterungsträger 6 das Laufrad 24 angeordnet, welches die Eingriffstiefe T der Hackelemente 23 in den Boden bestimmt. Die Eingriffstiefe T ist über die Verstellung des Laufrades 24 mittels der Tiefeneinstellspindel 25 variabel. Hierzu ist der Tragarm 26 des Laufrades 24 um den Bolzen 27 schwenkbar angeordnet.

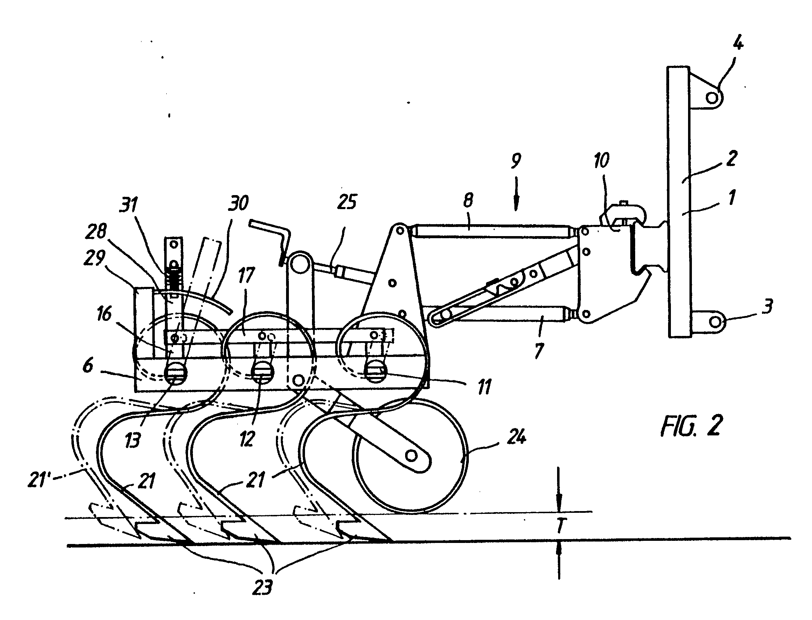

Die Hackanordnung gemäß Fig. 2 unterscheidet sich von der Hackanordnung gemäß Fig. 1 dadurch, daß die Verstellung der Hackwerkzeuge 21 nicht über eine Spindel 18 erfolgt, sondern die Arretierung erfolgt hier durch den an dem Arm 16 angeordneten Verlängerungselement 28. Des weiteren ist an der Einstellhalterung 29 das Rastelement 30 vorgesehen, indem im Abstand Löcher angeordnet sind. An dem Element 28 ist der federbelastete Rastbolzen 31 angeordnet, welcher in die in dem Element 30 angeordneten Löcher paßt. Durch Betätigen des Rastbolzens 30 kann der Arm 28 verschwenkt und der Rastbolzen 31 in andere Löcher einrasten, so daß die Hackwerkzeuge 21 aus der mit durchzogenen Linien dargestellten Position in die mit strichpunktierten Linien dargestellte Position 21′ verschwenkbar sind.

## Ansprüche

1. Von einem Schlepper ziehbare Anordnung von Hacken, die Hackwerkzeuge aufweisen und in Fahrtrichtung versetzt an Halterungsträgern angebracht sind, die über in vertikaler Richtung nachgiebige Parallelogrammgestänge an einen am Schlepper anzukuppelnden Querträger angebracht sind, wobei die Winkellage der Hackwerkzeuge zum Erdboden durch entsprechende Verstellung veränderbar ist (Schnittwinkelverstellung), dadurch gekennzeichnet, daß die Hackwerkzeuge (21) jeweils um eine quer zur Fahrtrichtung (14) verlaufende Achse (15) gegenüber den an Parallelogrammgestängen (9) angeordneten Halterungsträgern (6) verschwenkbar angeordnet sind.

2. Anordnung nach Anspruch 1, dadurch gekennzeichnet, daß jede Halterung (11,12,13) für die einzelnen Hackwerkzeuge (21) mit den Hackwerkzeugen (23) gegenüber den Halterungsträgern (6) um eine quer zur Fahrtrichtung (14) verlaufende Achse (15) verschwenkbar sind.

3. Anordnung nach Anspruch 1, dadurch gekennzeichnet, daß die an einem Parallelogrammgestänge (9) angeordneten federnden Hackwerkzeuge (21) einzeln gegenüber dem Halterungsträger (6) verschwenkbar und in verschiedenen Winkellagen fixierbar sind.

4. Anordnung nach Anspruch 1, dadurch gekennzeichnet, daß die jeweils an einem Parallelogrammgestänge (9) angeordneten Hackwerkzeuge (21) über eine gemeinsame Einstelleinrichtung (18,28) verschwenkbar und in ihrer Winkellage fixierbar sind.

5. Anordnung nach einem oder mehreren der vorstehenden Ansprüche, dadurch gekennzeichnet, daß die Verstelleinrichtung als Spindel (18) ausgebildet ist.

6. Anordnung nach einem oder mehreren der vorstehenden Ansprüche, dadurch gekennzeichnet, daß die Winkellage in Stufen veränderbar ist, wobei die Arretierung vorzugsweise als ein in Löcher einrastbarer Fixierbolzen (31) ausgebildet ist.

7. Anordnung nach Anspruch 1, dadurch gekennzeichnet, daß die Hackwerkzeuge (23) jeweils einen an der Halterung (11,12,13) angeordneten Federteil (22) aufweisen, an den sich das jeweilige Hackelement (23) anschließt.

8. Anordnung nach Anspruch 1, dadurch gekennzeichnet, daß die Hackwerkzeuge (23) einen federnden Hackteil aufweisen.

FIG. 1

EP 0 400 366 A1

FIG. 2

EP 0 400 366 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4750440 (L.R.POLLARD ET AL.)<br>* Spalte 6, Zeile 30 – Spalte 7, Zeile 13; Figuren 2, 3. * | 1-3. | A01B35/12 |
| Y | * Spalte 7, Zeile 22 – Spalte 9, Zeile 28 * | 4, 5, 7, 8. | |
| | --- | | |
| Y | CH-A-401565 (VAN DER LELY)<br>* Seite 2, Zeile 35 – Seite 3, Zeile 13; Figuren 1, 2. * | 4, 5, 7, 8. | |
| | --- | | |
| Y | GB-A-875952 (MASSEY-FERGUSON (GREAT BRITAIN) LTD)<br>* Seiten 1 – 2; Figur 2. * | 1-8. | |
| | --- | | |
| Y | AU-A-527506 (A.R.MECKLEM)<br>* Seite 3, Zeile 23 – Seite 4, Zeile 9; Figuren 2, 3. * | 1-8. | |
| | --- | | |
| A | GB-A-965646 (KVERNELANDS A/S)<br>* Seite 2, Zeilen 46 – 104 * | 1-4, 6-8. | RECHERCHIERTE SACHGEBIETE (Int. Cl.5 ) |
| | --- | | |
| A | BE-A-631393 (L.LABEYE)<br>* Seiten 3 – 4; Figur 2. * | 1-5, 7-8. | A01B |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 06 SEPTEMBER 1990 | WOHLRAPP R.G. |